# EUROPEAN PATENT APPLICATION

(11) **EP 4 756 710 A1**
(43) Date of publication of application: **10.06.2026**
(21) Application number: 25214613.9
(22) Date of filing: 10.11.2025
(51) Int. Cl.: G06T 7/00

(54) **SYSTEMS AND METHODS FOR DETERMINING COMPONENT PREDICTED LIFESPAN USING A MACHINE-LEARNED MODEL**

(30) Priority: 05.12.2024 PL 45047224
(71) Applicant: GE Vernova Technology GmbH, 5400 Baden (CH)
(72) Inventor: MACHALICA, Dawid Tadeusz, 02-256 Warsaw (PL); STOCKI, Rafal, 02-256 Warsaw (PL); CEGIELSKI, Adam, 02-256 Warsaw (PL); ZIOLKOWSKA, Alicja, 02-256 Warsaw (PL); LISKIEWICZ, Robert Tomasz, 02-256 Warsaw (PL)
(74) Representative: Openshaw & Co.

(57) **Abstract**

Computer-implemented methods and systems for determining component predicted lifespan are provided. The method includes obtaining, by a computing system comprising one or more computing devices, an image of the component. The method further includes obtaining, by the computing system, a stress map of the component. The method further includes processing, by the computing system, the image and the stress map of the component with a machine-learned model to generate, as an output of the machined-learned model, a predicted lifespan of the component.

## Description

### FIELD

The present disclosure relates generally to systems and methods for determining the predicted lifespan of components by utilizing artificial intelligence and/or machine learning.

### BACKGROUND

Throughout various applications, consistent and accurate prediction of component lifespan is generally desired. Such predictions can reduce damage due to component breakage and increase efficiency by allowing improved planning of component removal from service.

One application where such consistent and accurate prediction is desired is in applications wherein components are subjected to numerous extreme conditions (e.g., high temperatures, high pressures, large stress loads, etc.). Over time, an apparatus's individual components may suffer creep, deformation, fatigue cracking, etc. that may reduce the component's usable life. Such concerns might apply, for instance, to some turbomachines, such as gas turbine systems. During operation of a turbomachine, various components (collectively known as turbine components) within the turbomachine and particularly within the turbine section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation. Further, excess creep can cause creep rupture and resulting component breakage, which can result in unplanned outages and damage to other components in the system.

Accordingly, components such as turbine components may be monitored for creep. One approach to monitoring components for creep is to configure strain sensors on the components and analyze the strain sensors at various intervals to monitor for deformations associated with creep strain. This positioning can be time-consuming and costly, thus resulting in inefficiencies in the deformation monitoring process.

Accordingly, improved systems and methods for predicting component lifespan are desired. For example, systems and methods which can consistently and accurately predict creep, and which can thus allow for predicted lifespan planning based on such predictions, would be advantageous.

### BRIEF DESCRIPTION

Aspects and advantages of the systems and methods in accordance with the present disclosure will be set forth in part in the following description, or may be obvious from the description, or may be learned through practice of the technology.

In accordance with one embodiment, a computer-implemented method for determining component predicted lifespan is provided. The method includes obtaining, by a computing system comprising one or more computing devices, an image of the component. The method further includes obtaining, by the computing system, a stress map of the component. The method further includes processing, by the computing system, the image and the stress map of the component with a machine-learned model to generate, as an output of the machined-learned model, a predicted lifespan of the component.

In accordance with another embodiment, a computing system is provided. The computing system includes one or more processors. The computing system further includes one or more non-transitory computer-readable media that collectively store instructions that, when executed by the one or more processors, cause the computing system to perform operations, the operations include obtaining an image of the component. The operations further include obtaining a stress map of the component. The operations further include processing the image and the stress map of the component with a machine-learned model to generate, as an output of the machined-learned model, a predicted lifespan of the component.

These and other features, aspects and advantages of the present systems and methods will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present systems and methods, including the best mode of making and using the present systems and methods, directed to one of ordinary skill in the art, is set forth in the specification, which makes reference to the appended figures, in which:
FIG. 1 is a schematic illustration of a system obtaining images of a component in accordance with embodiments of the present disclosure;
FIG. 2 is a process flow chart for generating a predicted lifespan of the component in accordance with embodiments of the present disclosure;
FIG. 3 illustrates an example of applying machine learning and/or computer vision to enhance an image in accordance with embodiments of the present disclosure;
FIG. 4 illustrates an example of applying machine learning and/or computer vision to modify an image in accordance with embodiments of the present disclosure;
FIG. 5 illustrates a video of a component in accordance with embodiments of the present disclosure;
FIG. 6 illustrates a plurality of images of a component in accordance with embodiments of the present disclosure;
FIG. 7 illustrates processing of an image of a component by cropping the image in accordance with embodiments of the present disclosure;
FIG. 8 illustrates processing of an image of a component by at least one of pixel analysis, computer vision, and/or a machine learned model in accordance with embodiments of the present disclosure;
FIG. 9 illustrates a schematic representation of detected grain structures on a component in accordance with embodiments of the present disclosure;
FIGS. 10(A), 10(B), 10(C), and 10(D) illustrate comparisons between detected grain structures and stress maps of a component in accordance with embodiments of the present disclosure;
FIG. 11 illustrates a computing system in accordance with embodiments of the present disclosure; and
FIG. 12 is a flow chart illustrating a method for determining component predicted lifespan in accordance with embodiments of the present disclosure.

### DETAILED DESCRIPTION

Reference now will be made in detail to embodiments of the present systems and methods, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

As used herein, the terms "upstream" (or "forward") and "downstream" (or "aft") refer to the relative direction with respect to fluid flow in a fluid pathway. For example, "upstream" refers to the direction from which the fluid flows, and "downstream" refers to the direction to which the fluid flows. However, the terms "upstream" and "downstream" as used herein may also refer to a flow of electricity. The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

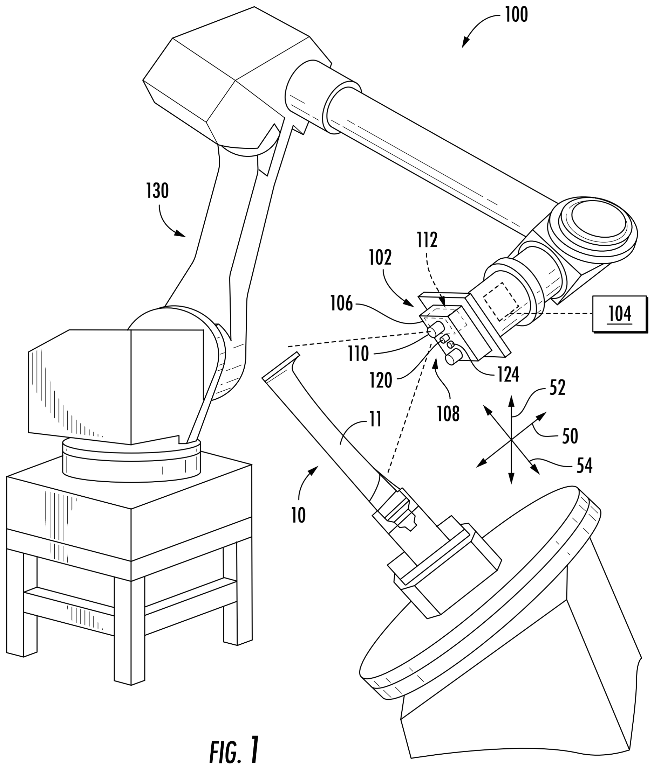

The present disclosure is generally related to methods for predicting a life of a component (e.g., the creep life of a component). Particularly, the component may be a component of a gas turbine engine, such as a compressor component (e.g., a compressor blade or stator vane) or a turbine component (e.g., a turbine blade or stationary nozzle). The method may include two approaches. In the first approach (i.e., the manual approach), images (such as pictures, scans, videos) of the component may be received or obtained by a computing system. The computing system may also receive a stress map of the component. The stress map may be obtained by finite element analysis (FEA) of the component. Based on the stress map and the images, the system may determine or identify an area of interest and crop the area of interest. The system may detect contours, filter the contours representing true grains on the component, and overlap the grains with the stress map. Based on a comparison of the grains and the stress map, the computerized system may extract one or more features and/or make a prediction on the remaining creep life of the component. Alternatively, or additionally, in a second approach the images and the stress map may be provided to a machine learned model, which may then generate a prediction of the remaining creep life based on the inputs. Referring now to FIG. 1, a component 10 is provided. The component 10 (and more specifically the substrate of the overall component 10) can include a variety of types of components used in a variety of different applications, such as, for example, components utilized in high temperature applications (e.g., components comprising nickel or cobalt based superalloys, austenitic steels, etc.). In some embodiments, the component 10 may include an industrial gas turbine or steam turbine component such as a combustion component or hot gas path component. In some embodiments, the component 10 may include a turbine blade, compressor blade, vane, shroud, rotor, or a transition piece. In other embodiments, the component 10 may include any other component of a turbine such as any other component for a gas turbine, steam turbine or the like. In some embodiments, the component may include a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

In exemplary embodiments, the component 10 is an equiaxed or directionally solidified component. For example, the component 10 may be a cast component and, after casting, the melt in the mold may advantageously be equiaxed or directionally solidified.

In some embodiments, the component 10 may be a new component (e.g., not having been installed in a machine or having undergone any operational cycles). However, in exemplary embodiments, the component 10 may have undergone at least one operational cycle. For example, in embodiments in which the component 10 is a turbine component, the component 10 may have undergone at least one operational cycle within a gas turbine. That is, during operation of the gas turbine, the turbine component may be exposed to high temperature combustion gases, operational vibrations, and mechanical forces that cause the turbine component to degrade, warp, and/or creep over time. As used herein, "operational cycle" may refer to a component or components that have spent a certain amount of time operating within a machine (such as a gas turbine). In this way, a component that has not undergone any operational cycles has never been used in the operation of a machine (such as a gas turbine). An operational cycle for a gas turbine may be between about 0 hours and about 50,000 hours of operation (or such as between about 500 hours and about 50,000 hours, or such as between about 1000 hours and about 50,000 hours, or such as or such as between about 10,00 hours and about 50,000 hours).

A coordinate system is additionally illustrated in FIG. 1. The coordinate system includes an X-axis 50, a Y-axis 52, and a Z-axis 54, all of which are mutually orthogonal to each other and defined with reference to the component 10.

FIG. 1 further illustrates a computing system 100, which may include for example a data acquisition system 102 and a user computing system 104. The data acquisition system 102 generally acquires data regarding the component 10, and the computing system 104 generally analyzes the data and performs various calculations and other functions as discussed herein. In particular, computing systems 100 in accordance with the present disclosure provide accurate and efficient prediction of component 10 lifespan, as discussed herein.

It should be noted that the various subsystems in computing system 100, such as the data acquisition system 102, user computing system 104, and other suitable subsystems, may be linked together as discussed herein or may be separate, discrete systems.

In accordance with one embodiment, data acquisition system 102 may include an imaging device 106 for obtaining one or more images of the component 10. Such images may be in the form of discrete images (e.g. photographs) or a video which includes a plurality of video frame images extracted from the video. For example, imaging device 106 may include a lens assembly 110 and an image capture device 112. Lens assembly 110 may generally magnify images viewed by the lens assembly 110 for processing by the image capture device 112. Lens assembly 110 in some embodiments may, for example, be a suitable camera lens, telescope lens, etc., and may include one or more lens spaced apart to provide the required magnification. Image capture device 112 may generally be in communication with the lens assembly 110 for receiving and processing light from the lens assembly 110 to generate images. In exemplary embodiments, for example, image capture device 112 may be a camera sensor which receives and processes light from a camera lens to generate images, such as digital images, as is generally understood. Image capture device 112 (and device 106 generally) may, in some embodiments, further be in communication with the computing system 104, via for example a suitable wired or wireless connection, for storing and analyzing the images from the image capture device 112 and device 106 generally. In some embodiments, user computing system 104 may operate imaging device 106 to perform various disclosed steps. In other embodiments, imaging device 106 may be a standalone device operated separately by a user and may be linked to user computing system 104 or may be a separate, discrete system.

Additionally or alternatively, data acquisition system 102 may additionally include a three-dimensional data acquisition device 108 for examining exterior surface 11 of the component 10. Devices 108 in accordance with the present disclosure generally utilize surface metrology techniques to obtain direct measurements of the component 10 along three axes. In particular, non-contact surface metrology techniques may be utilized in exemplary embodiments. In general, any suitable three-dimensional data acquisition device 108 which utilizes surface metrology techniques to obtain direct measurements in three dimensions may be utilized (such as a blue light scan). In exemplary embodiments, device 108 is a non-contact device which utilizes non-contact surface metrology techniques.

In accordance with one embodiment, device 108 in some exemplary embodiments is a laser scanner which generates a laser scan image. Laser scanners generally include lasers 120 which emit light in the form of laser beams towards objects, such as in these embodiments components 10 generally. The light is then detected by a sensor 124 of the device 108. For example, in some embodiments, the light is then reflected off of surfaces which it contacts, and the light is received by a sensor 124 of the device 108. The round-trip time for the light to reach the sensor 124 is utilized to determine measurements along the various axes. These devices are typically known as time-of-flight devices. In other embodiments, the sensor 124 detects the light on the surface which it contacts, and determines measurements based on the relative location of the light in the field-of-view of the sensor 124. These devices are typically known as triangulation devices. X-axis, Y-axis, and Z-axis data points are then calculated based on the detected light, as mentioned.

In some embodiments, the light emitted by a laser 120 is emitted in a band which is only wide enough to reflect off a portion of object to be measured. In these embodiments, robotic arm (as discussed herein) or other suitable mechanism for moving the laser 120 may be utilized to move the laser 120 and the emitted band as required until light has been reflected from the entire object to be measured.

In other embodiments, other suitable surface metrology devices may be utilized. For example, in some embodiments, device 108 may be an x-ray scanner which provides images in the form of x-rays. In some embodiments, device 108 may be or include a high-resolution crystal orientation system which provides images in the form of Laue diffraction patterns, e.g. Laue orientation images. In some embodiments, device 108 may be a scanning electron microscope which provides images in the form of electron channeling contrast images. In some embodiments, device 108 may be a three-dimensional scanner which provides images in the form of three-dimensional scanned geometries.

In some embodiments, data acquisition system 102 may include a robotic arm 130. The robotic arm 130 may support and facilitate movement of other components of the data acquisition system 102 relative to the component to obtain images of the component. For example, the imaging device 106 and data acquisition device 108 (or components thereof, such as light sources) may be mounted to the robotic arm 130. Movement of the robotic arm 130 may, in exemplary embodiments, position the data acquisition system 102 or components thereof (such as light sources) relative to the component 10. In some embodiments, other components, such as imaging device 106, may remain stationary while components such as lighting sources are movable. In exemplary embodiments, the robotic arm 130 is a six-degree-of-freedom arm 130 which provides movement along and about axes 50, 52, 54.

In some embodiments, user computing system 104 may operate data acquisition system 102 to perform various disclosed steps. In other embodiments, data acquisition system 102 may be a standalone device operated separately by a user and may be linked to user computing system 104 or may be a separate, discrete system. For example, in some embodiments, a user may manually obtain images and upload the images to the user computing system 104.

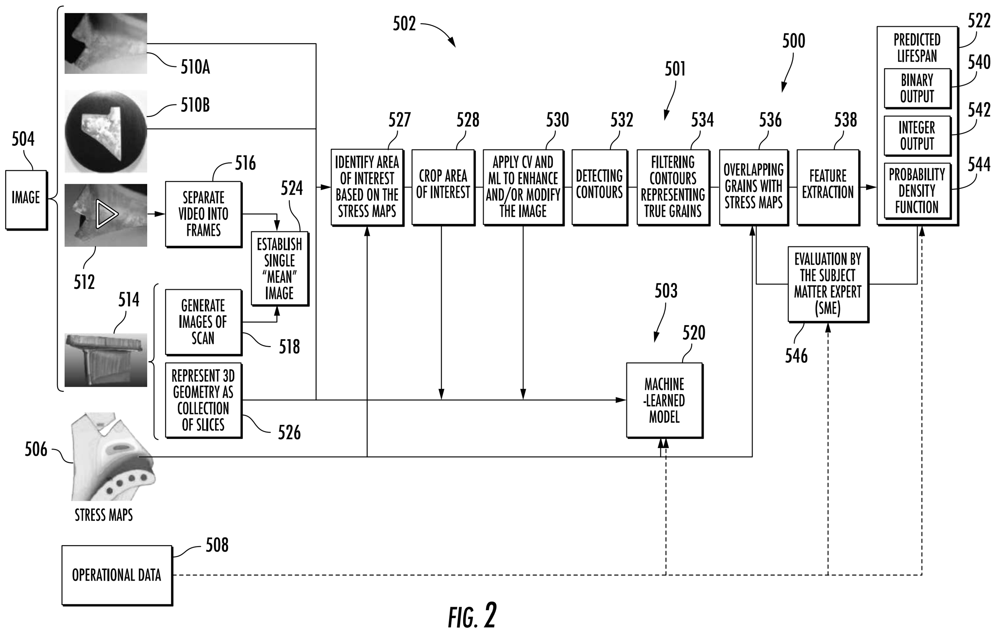

Referring now to FIG. 2, a process flow chart for generating a predicted lifespan 522 of the component 10 is illustrated in accordance with embodiments of the present disclosure. The process 500 may be implemented by the computing system 100 described hereinabove (and described in further detail below). Particularly, the process 500 illustrates two separate paths for generating the predicted component lifespan 522, e.g., a multi-step path 501 and an end-to-end503. Both paths 501, 503 may be accomplished by the computing system 100, but the end-to-end path 503 may utilize a machine-learned model 520 that streamlines the multi-step 501 (e.g., in an end-to-end approach). Data utilized and/or generated by the multi-step 501 (such as the inputs 502 and the output predicted lifespan 522) may be provided for teaching or training the machine-learned model 520. In some embodiments, the machine-learned model 520 maybe trained independently, e.g., without any reference to data generated via the multi-step path 501. Both paths 501 and 503 may be automatic, but the machine-learned model may replace several steps in the multi-step path 501. The machine-learned model 520 may be one of (or a combination of) the following: multi-input neural networks (e.g., multi-modal neural networks); convolutional neural networks (CNNs) with tabular data fusion (which is an optional extension of a CNN); deep embedded clustering (DEC); autoencoders; residual networks (ResNet); and/or capsule networks (CapsNets). Machine-learned models 520 may be capable of predicting creep life directly based on a combination of tabular data (e.g., operating conditions), images, and/or stress maps

The process 500 may include one or more inputs 502, including an image 504, a stress map 506, and/or operational data 508. As shown, the image 504 may be at least one of a photograph 510A, 510B, a video 512, a laser scan image, an x-ray scan image, a Laue orientation image, an electron channeling contrast image, or a three-dimensional scanned geometry 514. The photographs 510A, 510B may be at least one of a photograph 510A of an exterior surface of the component or a photograph 510B of an interior surface of the component. That is, the photograph 510B may be of a metallurgical sample composed of the same or similar material as the component in some embodiments. In other embodiments, the photograph 510B may be a cross-section of another component. For example, if the component being analyzed by the process 500 is a gas turbine airfoil (e.g., in order to predict the lifespan), one of the inputs 502 may be an image of a cross-section (or metallurgical sample) of another gas turbine airfoil.

The process 500 may include at step 516 separating the video 512 into one or more (such as a plurality) of frames. That is, the video 512 may include the plurality of frames, which may be separated and/or selected (e.g., by the computing system 100) to generate a plurality of photographs. Similarly, at step 518, images of the three-dimensional scanned geometry 514 may be generated, e.g., by the computing system 100. It should be noted that such images may be provided by data acquisition system 102 and computing system 100 generally, or independently from data acquisition system 102 and computing system 100 generally. In many embodiments, the process 500 may further include, at step 524, establishing a single "mean" image. The mean image may be generated from the plurality of frames generated from the video 512 in step 516 and/or from the plurality of images generated from the three-dimensional scan 514. Establishing the mean image at step 524 may include collecting the images, initializing a sum image, summing the pixel values, calculating a mean, converting the image format, and saving the mean image. Establishing the mean image may include extracting mean, median, min, max, weighted average and any other aggregation of the pixel intensities.

In many embodiments, the process 500 may include, at step 526, representing the three-dimensional scan 514 of the component 10 as a collection (or plurality) of slices. Each slice in the plurality of slices may be an image that illustrates a different cross-sectional portion of the scanned component. In this way, when the plurality of slices are stacked together, they collectively form the scanned component. The plurality of slices may be generated by the computing system 100 or generated separately (e.g., by a separate computing system) and provided to the computing system 100 for analysis. In other embodiments, the three-dimensional scan may be a point cloud dataset generated with a lidar sensor. In other embodiments, the three-dimensional scan may be a wave based detection dataset. In further embodiments, the three-dimensional scan may be an original CAD drawing.

The stress map 506 may, for example, be generated via a finite element analysis ("FEA") of the component 10, which may for example be performed by the computing system 100 or performed separately (such as via a separate computing system) and provided to the computing system 100. Examples of suitable FEA software for such analyses include, for example, ANSYS, Simulia, Nastran, etc. The stress map 506 may indicate regions of high stress and low stress in the component 10, which may be at least partially based on operational data associated with the component 10 (such as operation hours, average temperature the component is exposed to, or other operational data).

The operational data 508 may be associated with the component 10 and may include time data and temperature data. The time data may be indicative of an amount of time the component 10 spent in operation. For example, in embodiments in which the component is a gas turbine component, the time data may be indicative of an amount of time the gas turbine component spent inside an operating gas turbine. The temperature data may be indicative of a plurality of temperatures (or average temperature) that the component was exposed to when in operation. For example, in embodiments in which the component is a gas turbine component, the temperature data may be the temperatures the gas turbine component was exposed to during operation, which may be a plurality of temperatures over a time period or an average temperature. In many embodiments, the temperature data may be descriptive of temperature ranges, a temperature delta over the operational time, and/or a set of temperature deltas under given intervals to identify quick temperature changes.

In many embodiments, the process 500 (e.g., the multi-step path 501) may include, at step 527, identifying an area of interest of the component 10 based on the stress maps 506 of the component 10. For example, the stress map 506 may indicate locations on the component 10 that experience increased stress relative to other locations. These areas of increased stress may be more susceptible to material creep. In various implementations, the process 500 may further include, at step 528, cropping the area of interest of the image that was identified based on the stress maps 506. For example, the area of interest illustrated in the image 504, which was identified by the stress map 506, may be cropped (e.g., by the computing system 100). Cropping the image 504 may include removing portions of the image 504 that are not necessary for further processing (e.g., areas of the component 10 illustrated by the image 504 that do not correspond with areas of increased stress identified by the stress maps 506). The cropped image may be provided to the machine-learned model 520 in many implementations. The cropped image may rely on an area indicated by the stress map 506, which may be generated by a finite element analysis (FEA) system.

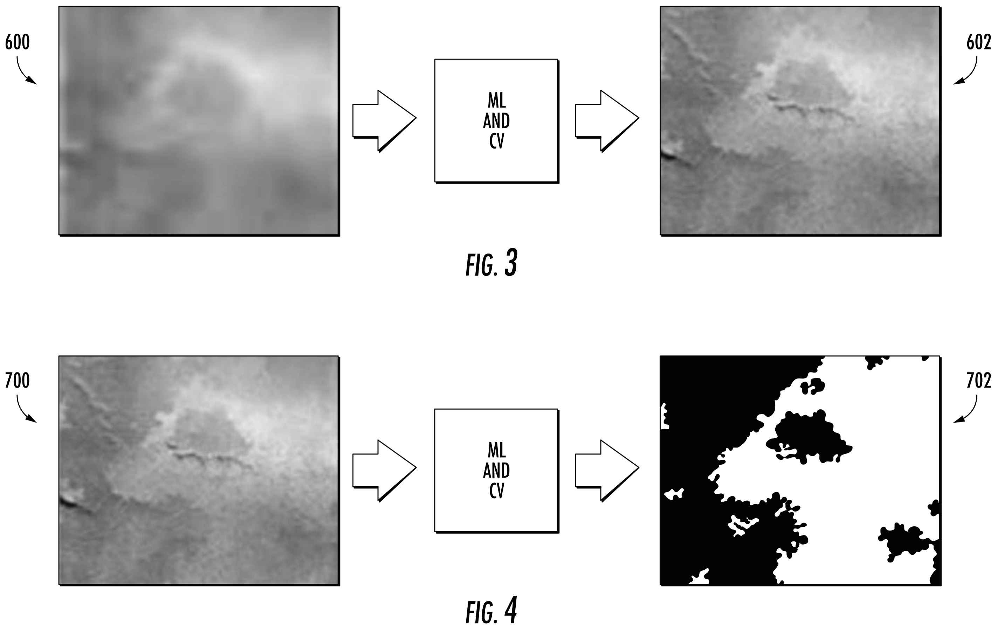

In various embodiments, the process 500 may further include, at step 530, applying computer vision (CV) and machine learning (ML) techniques to enhance, modify, and/or transform the image 504. For example, FIGS. 3 and 4 illustrate examples of how ML and CV may be utilized (e.g., by the computing system 100) for enhancing or modifying an image. In FIG. 3, a blurred image 600 may be processed by the computing system 100 with CV and/or ML to produce an enhanced image 602. Particularly, the computing system 100 may include a machine-learned model that is configured to receive the blurred image 600 and generate the enhanced image 602. That is, the computing system may process the blurred image 600 with the machine-learned model and/or the computer vision to generate the enhanced image 602. The enhanced image 602 may be sharper and have more defined lines (e.g., with a greater number of pixels) than the blurred image 600. In FIG. 4, a greyscale image 700 may be processed by the computing system 100 with CV and/or ML to produce a black-white image 702 representing the grain boundaries. Referring back to FIG. 2, the enhanced image 602 and/or black-white image 702 may be provided to the machine-learned model 520 in many implementations.

Examples of the ML models that may be utilized by the computing system 100 for enhancing or modifying an image may include, but are not limited to: Convolutional Neural Networks (CNNs); Deep Image Prior (DIP); Autoencoders and Denoising Autoencoders (DAEs); Generative Adversarial Networks (GANs); Image Super-Resolution Models; Recurrent Neural Networks (RNNs); and Long-Short Term Memory (LSTM). Examples of CV techniques that may be utilized by the computing system 100 for enhancing or modifying an image may include, but are not limited to: Histogram Equalization and Adaptive Histogram Equalization; Image Binarization; Smoothing methods e.g., Gaussian Smoothing; Unsharp masking; Sharpening filters; Median filtering; and Blob analysis and removal. Examples of suitable computer vision software for such analyses includes, for example, the OpenCV Python library. OpenCV Python Library includes a wide range of computer vision techniques, including image processing, video analysis, object detection, feature detection and matching, and others.

Histogram equalization may be utilized for redistributing the intensity values of pixels so the pixels span the entire range of possible value, which enhances the visibility of features in the image. Image binarization may be utilized for converting a grayscale or color image into a binary image, which may consists of only black and white. Gaussian smoothing may include convolving an image with a Gaussian function, which produces a weighted average of the surrounding pixel values, and which results in a smoother image. Blob analysis and removal may be used for removing "noise" or "blobs" from an image, thereby making the image more clear.

Referring back to FIG. 2, in many embodiments, the process 500 may further include, at step 532, detecting contours of the image 504, and, at step 534, filtering the contours to represent the true grains of the component 10. Further, in step 536, the process 500 may include overlapping (or overlaying) the grains with the stress map 506. In step 538, the process 500 may further include extracting grain characteristics (e.g., feature extraction). Steps 532 through 538 are discussed in more detail below. At least partially based on the relationship between the grains and the stress map identified in step 536, the process 500 may include determining the predicted lifespan 522 of the component 10. In many embodiments, process 500 may include determining the predicted lifespan 522 of the component at least partially based on temperature data and time of exposure data (e.g., time exposed to peak temperatures).

In step 538, the feature extraction may include extracting features related to individual grains or express aggregates of grains (e.g., count, mean, median, max, min, etc.) of the component 10. For example, features may include the following characteristics of the grains, which may be extracted from the image of the component 10: relative orientation of the stresses with regard to grain boundary at given point; number of grains; area; perimeter; centroid; bounding box; aspect ratio; extent; solidity; equivalent diameter; orientation; major axis length; minor axis length; eccentricity; convex hull; convexity defects; moments; and contour length.

In exemplary embodiments, the process 500 (e.g., the end-to-end path 503) may include the machine-learned model 520, which may be stored in the computing system 100, and which may be utilized by the computing system 100 for generating the predicted lifespan 522 of the component 10. That is, the inputs 502 may be processed by the computing system 100 with the machine-learned model 520 to generate, as an output of the machined-learned model 520, a predicted lifespan 522 of the component 10.

As should be appreciated, the predicted lifespan 522 generated using the multi-step path 501 may be utilized for training the machine-learned model 520. In this way, the predicted lifespan 522 generated using the multi-step path 501 may be the multi-step predicted lifespan 522 for purposes of training the machine-learned model 520. In another approach, the machine learned model 520 may be trained on manually labeled samples (e.g., images of manually labeled components and/or manually labeled images of components)

The predicted lifespan 522 may be at least one of a binary output 540, an integer output 542, and/or a probability density function 544. The binary output 542 may be a single output (e.g., yes or no) of whether the component 10 can survive another operational cycle. The integer output 542 may be a number of operational cycles the component 10 can survive (e.g., one more cycle, two more cycles, three more cycles, etc.). The probability density function 544 may indicate an amount of hours the component 10 can survive in operation.. More specifically, the probability density function 544 may be descriptive of the likelihood of a continuous random variable taking on a particular value. Particularly, a cumulative distribution function (CDF) may be output as the predicted lifespan 522, which describes the probability that a random variable (X) will take a value less than or equal to a specific value (x). For example, a CDF as a predicted lifespan 522 may indicate a probability (e.g., as a percent) to reach X hours

Machine learning models which may be applicable to generating the predicted lifespan 522 may include, but are not limited to: Logistic Regression; Parametric Survival models, such as General Loglinear models (GLL); Decision Trees; Random Forest; Gradient Boosting Machines (GBM); XGBoost (Extreme Gradient Boosting); LightGBM (Light Gradient Boosting Machine); CatBoost; Support Vector Machines (SVM); K-Nearest Neighbors (KNN); Naive Bayes; Generalized Linear Models, and/or Artificial Neural Networks (ANN).

In many embodiments, the process 500 may include an optional step 546 of evaluation by a subject matter expert (SME). During step 546, the SME may evaluate the predicted lifespan, the component, and the overlayed grains with the stress maps to ensure an accurate prediction has been made. SME may also rely on the data to make decision themselves, without any automatic prediction tool.

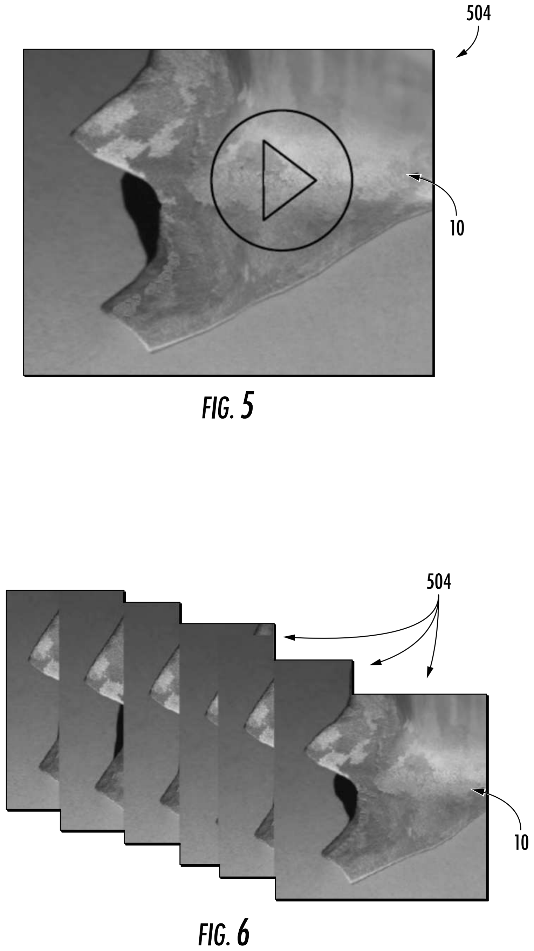

FIG. 5 illustrates an exemplary embodiment of a plurality of images 504, in this embodiment in the form of a video which includes a plurality of video frames. FIG. 6 illustrates a plurality of images 504, which may be the plurality of video frames from FIG. 5, a plurality of photographs, or a plurality of images obtained from another suitable embodiment of data acquisition system 102 as discussed above. It should be noted that such images may be provided by data acquisition system 102 and computing system 100 generally, or independently from data acquisition system 102 and computing system 100 generally.

A computing system 100, such as the data acquisition system 102 and/or the user computing system 104 thereof, may be capable of processing one or more images 504 of a component 10. Such processing may detect one or more grain structures on the component 10.

A grain structure in accordance with the present disclosure may be or include one or more of a grain, a grain boundary, a size (e.g. length, etc.) of a grain or grain boundary, a shape coefficient of a grain, an aggregate grain size such as minimum, maximum, median, etc., a grain or grain boundary orientation, and/or a grain boundary triple point.

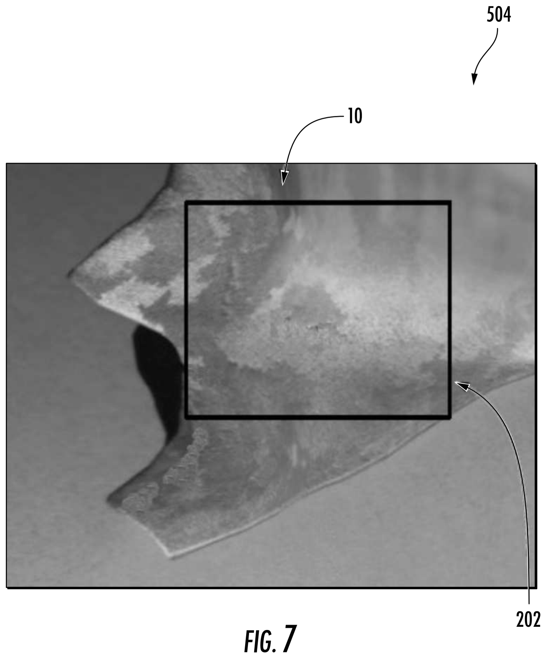

Computer vision may be utilized to perform the cropping of the image 504 and/or pixel analysis of the image 504. For example, in some embodiments, such processing may include cropping the one or more images 504. Cropping allows for focusing on a specific area of interest on the component 10, such as a portion of the component that is particularly susceptible to high temperatures and high stresses. Computer vision and cropping may also be utilized for removing unnecessary background, which would otherwise consume processing power. FIG. 7 illustrates an image 504 along with a cropped portion 202 thereof.

Additionally or alternatively, in some embodiments, such processing may include performing computer vision techniques and/or a pixel analysis of the image 504. This analysis is generally an analysis which differentiates a reference object (for example, grain structures) from a background (for example, the component surface and background) on the basis of differences in color depth (i.e. differences in color or in greyscale). The analysis may be performed on each individual pixel or groups of pixels defining the image 504. For a pixel analysis to occur, the number of bits-per-pixel of the image i.e. 128, 256, etc., may for example be divided into two or more groups (for example a group which includes the lighter color depths and a group which includes the darker color depths). Each group is categorized as a reference object portion or a background portion. For example, the color depth analysis may categorize pixels or multi-pixel groups that are darker or lighter color depths as denoting a reference object (i.e. a surface feature relative to the component, or the component relative to a background), and may categorize pixels or multi-pixel groups that are the other of darker or lighter color depths as denoting a background (i.e. the component relative to a surface feature, or a background relative to the component). Notably, different divisions in the lighter and darker groups may be utilized to distinguish surface features from the component, and the component from a background.

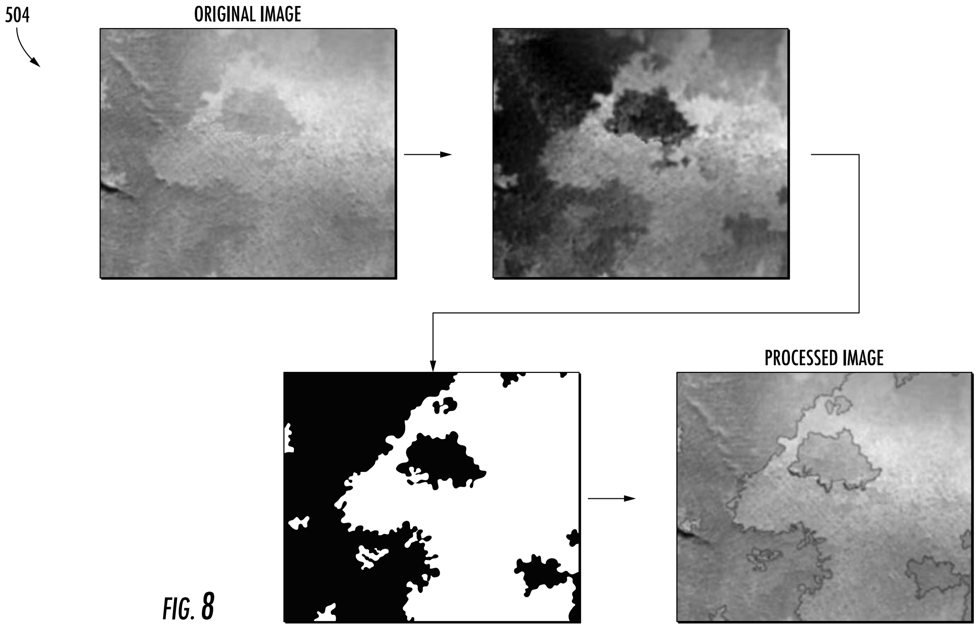

FIG. 8 illustrates one embodiment of a pixel analysis, in which the image contrast is gradually improved via pixel analysis such that grain structures are detected.

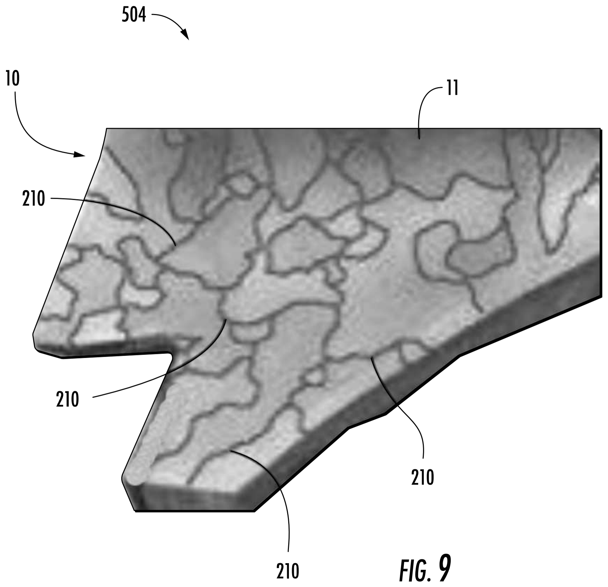

FIG. 9 illustrates a plurality of detected grain structures 210 on a component 10. Notably, the detected grain structures may, in exemplary embodiments, be detected with reference to axes 50, 52, 54. Understanding the localization (e.g. orientation, position, and/or shape) of the detected grain structures is critical to creep and lifespan predictions in accordance with the present disclosure.

The computing system 100, such as the data acquisition system 102 and/or the user computing system 104 thereof, may further be capable of comparing the detected grain structures 210 with a stress map 220 of the component 10. This advantageously facilitates correlation of structure details with directional stresses in specific areas. The stress map 220 may include a map of stress directions, such as for example a contour map of various stress tensor components, in one or more directions, such as along the axes 50, 52, and/or 54 as well as along directions at various angles to the axes 50, 52, and/or 54. The stress map 220 may, for example, be generated via a finite element analysis ("FEA") of the component 10, which may for example be performed by the computing system 100 or performed separately (such as via a separate computing system) and provided to the computing system. Examples of suitable FEA software for such analyses include, for example, ANSYS, Simulia, Nastran, etc.

Comparing of the detected grain structures 210 with the stress map 220 may allow for determination of where grain structures and areas of increased stress or stress directions occur. Further, such comparison may allow for comparison between the localizations (e.g. relative to axes 50, 52, 54) of such grain structures and directions of increased stress or stress directions.

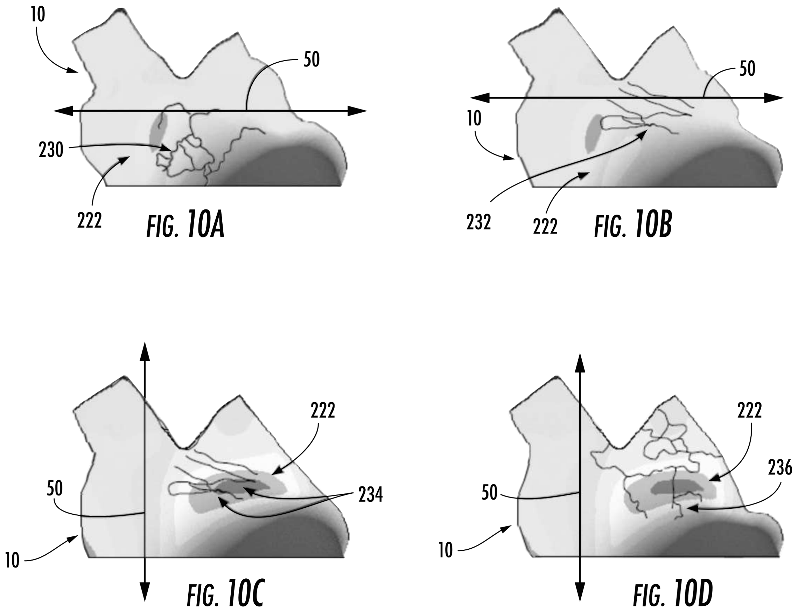

For example, and with reference to FIGS. 10(A), 10(B), 10(C), and 10(D), in some embodiments, the comparing step may include overlaying the stress map 220 (e.g., the stress maps 506 with reference to FIG. 2) onto the processed image 504 to compare localizations of the detected grain structures 210 with stress directions 222 (e.g. directional orientations of stress concentrations) of the stress map 220. The overlay may occur with reference to the axes 50, 52, 54 so that the axes in the processed image 504 and the stress map 220 match.

Such comparison may include, for example, a detection of grain structures 210 that are within a stress direction 222, and a determination of a localization of those detected grain structures 210 relative to the certain stress direction 222. For example, FIGS. 10(A) and 10(B) illustrate an overlay of a stress map 220 onto a processed image 504 to compare localizations of the detected grain structures 210 with stress directions 222 along the X-axis 50. As shown in FIG. 10(A), arrow 230 indicates an exemplary grain structure 210 that is within a stress direction 222 and generally perpendicular to the stress direction 222. As shown in FIG. 10(B), arrow 232 indicates an exemplary grain structure 210 that is within a stress direction 222 and generally parallel to the direction of the stress direction 222. FIGS. 10(C) and 10(D) illustrate an overlay of a stress map 220 onto a processed image 504 to compare localizations of the detected grain structures 210 with stress directions 222 along the Y-axis 52. As shown in FIG. 10(C), arrow 234 indicates an exemplary grain structure 210 that is within a stress direction 222 and generally perpendicular to the stress direction 222. As shown in FIG. 10(D), arrow 236 indicates an exemplary grain structure 210 that is within a stress direction 222 and generally parallel to the stress direction 222.

A computing system 100, such as the data acquisition system 102 and/or the user computing system 104 thereof, may further be capable of determining a predicted lifespan of the component 10, such as based on the creep behavior of the material. The predicted lifespan of the component 10 may be based on a localization of one or more detected grain structures 210 and the stress map 220 of the component 10. For example, such determination may be based on the detection of grain structures 210 that are within a stress direction 222, and the determination of a localization of those detected grain structures 210 relative to the certain e.g. stress direction 222.

In exemplary embodiments, the determining step includes determining a creep probability based on the localization of one or more detected grain structures 210 and a stress direction 222 of the stress map 220, and determining a predicted lifespan of the component 10 based on the creep probability. For example, the detection of grain structures 210 that are within a stress direction 222, and the determination of a localization of those detected grain structures 210 relative to the certain direction of the stress direction 222, may be utilized to determine a creep probability of the component 10. One or more creep probabilities may be generated based on such detections and determinations. The creep probabilities may then be utilized to adjust the predicted lifespan of the component 10, such as relative to a baseline predicted lifespan.

For example, as discussed, FIG. 10(A), illustrates an exemplary grain structure 210 that is within a stress direction 222 and generally perpendicular to the stress direction 222. FIG. 10(C) also illustrates an exemplary grain structure 210 that is within a stress direction 222 and generally perpendicular to the stress direction 222. Such generally perpendicular grain structures 210 will increase the probability of creep, and thus lower the predicted lifespan of the component 10. FIG. 10(B) illustrates an exemplary grain structure 210 that is within a stress direction 222 and generally parallel to the stress direction 222. FIG. 10(D) also illustrates an exemplary grain structure 210 that is within a stress direction 222 and generally parallel to the stress direction 222. Such generally parallel grain structures 210 will decrease, not increase, or increase relatively less than, e.g., perpendicular, the probability of creep, and thus may raise or not lower the predicted lifespan of the component 10.

It should be understood that the present disclosure is not limited to comparisons with stress directions only along axes 50, 52, and/or 54, or to predicted lifespan determinations only based on generally parallel or generally perpendicular grain structures. Rather, such comparisons and determinations are exemplary embodiments, and the present disclosure encompasses stress directions in any suitable directions and predicted lifespan determinations based on grain structures having any suitable localizations relative to the stress directions. The present inventors have discovered the ability to detect macrostructure on real three-dimensional components using non-destructive characterization technique; and the ability to link extracted grain structures with stress maps to execute automatic computer based reasoning on the creep life of the specific component. The present disclosure advantageously facilitates more accurate and consistent lifespan prediction and creep probability determinations on this basis.

In some embodiments, additional variables may be utilized to determine the predicted lifespan of the component 10. For example, such additional variables may be utilized to determine the creep probability. Examples of such variables may include, for example, material type of the component, a use time of the component 10, and/or a use temperature of the component 10.

The value or magnitude of a grain structure or of one or more of such additional variables may be utilized to adjust the predicted lifespan. For example, a relatively large grain boundary (relative to, for example, a predetermined threshold value for a component 10), may increase the predicted lifespan, whereas a relatively small grain structure (relative to, for example the threshold value), may decrease the predicted lifespan. Similarly, a relatively short use time or low use temperature (relative to, for example, a predetermined threshold value for a component 10), may increase the predicted lifespan, whereas a relatively long use time or high use temperature (relative to, for example the threshold value), may decrease the predicted lifespan. Such increases and/or decreases may be made relative to a baseline predicted lifespan for the component, which may be predetermined or determined using computing system 100.

The value or magnitude of such additional variables, as well as threshold values, may be determined by the computing system 100, or may be determined independently and provided to the computing system 100 for use in the determining step.

The determined predicted lifespan may advantageously be output from the computing system 100, such that a user of the computing system receives the determined predicted lifespan. The predicted lifespan determination may advantageously provide a relatively accurate lifespan estimate, thus allowing the user to extend the actual use life of the component 10 as allowed per the determined predicted lifespan with a reduced concern of breakage risk. The predicted lifespan determination may further advantageously allow the user to reduce the actual use life of the component 10 and remove the component 10 from service prior to breakage risk, etc. per the determined predicted lifespan, thus reducing unplanned outage issues.

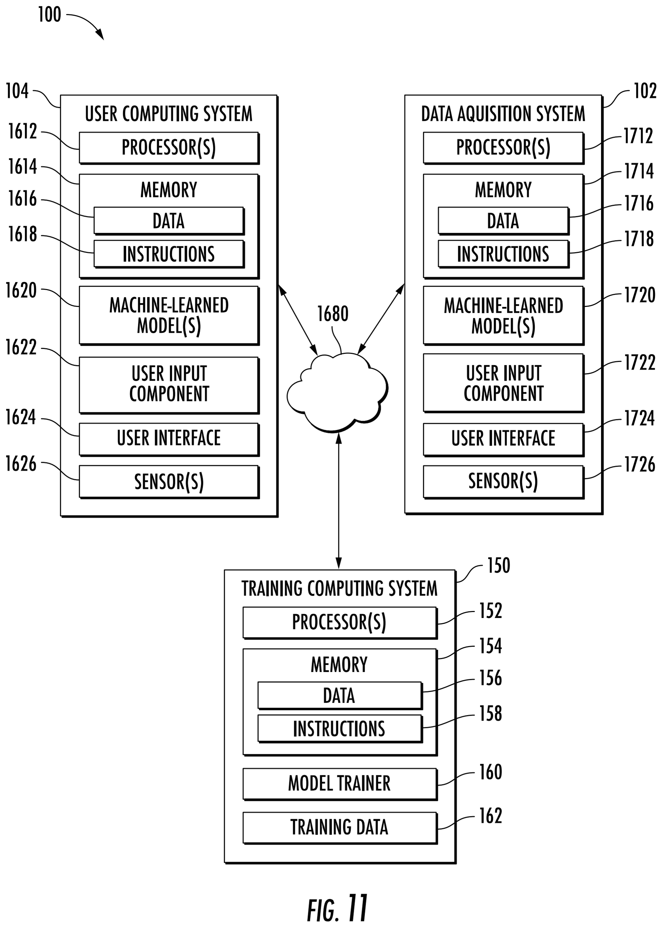

FIG. 11 depicts a block diagram of an example computing system 100 that performs one or more of the various functions and steps described herein in accordance with embodiments of the present disclosure. The computing system 100 can include a plurality of computing systems that communicate over a network 1680. The computing system 100 can include one or more user computing systems 104, and one or more data acquisition systems 102.

The user computing system 104 can include one or more computing devices. The computing devices can include a mobile computing device (e.g., a smartphone or tablet), a laptop computing device, a desktop computing device, a wearable computing device (e.g., a smart watch, a smart jacket, smart glasses, smart backpacks, etc.), a smart appliance (e.g., a smart thermostat, a smart refrigerator, a smart washing machine, a smart dryer, etc.), an embedded computing device, a surveillance computing device (e.g., a drone), or any other type of computing device.

The user computing system 104 can include one or more processors 1612 that can be utilized to perform one or more operations. The one or more processors 1612 can include any suitable processing device (e.g., a processor core, a microprocessor, an ASIC, a FPGA, a controller, a microcontroller, etc.) and can be one processor or a plurality of processors that are operatively connected. The one or more processors 1612 can perform operations in series and/or in parallel. The one or more processors 1612 may be dedicated to a particular computing device and/or may be utilized by a plurality of devices to perform processing tasks.

The user computing system 104 may include memory 1614 that can store data 1616 and/or instructions 1618. The memory 1614 can include one or more non-transitory computer-readable storage mediums, such as RAM, ROM, EEPROM, EPROM, flash memory devices, magnetic disks, etc., and combinations thereof. The data 1616 can include user data, application data, operating system data, etc. The data 1616 can include text data, image data, audio data, statistical data, latent encoding data, etc. The instructions 1618 can include instructions that when executed by the one or more processors 1612 cause the user computing device 104 to perform operations.

In some implementations, the user computing system 104 can store and utilize one or more machine-learned models 1620 (such as the machine-learned model 520 described above, or another model). The one or more machine-learned models 1620 can include a computer vision model, which can for example include an object detection model. The one or more machine-learned models 1620 can further include a detection model, a natural language processing model, a segmentation model, a classification model, an augmentation model, a generative model, a discriminative model, and/or one or more other model types. In some implementations, the one or more machine-learned models 1620 can include various machine-learned models such as neural networks (e.g., deep neural networks) or other types of machine-learned models, including non-linear models and/or linear models. Neural networks can include convolutional neural networks, feed-forward neural networks, recurrent neural networks (e.g., long short-term memory recurrent neural networks), or other forms of neural networks. The one or more machine-learned models 1620 may include one or more transformer models.

The user computing system 104 can include one or more user input components 1622, one or more user interfaces 1624, and/or one or more sensors 1626. The one or more user input components 1622 can be configured to receive user inputs and/or environmental inputs. For example, the one or more user input components 1622 can include a touch-sensitive component (e.g., a touch-sensitive display or a touch pad) that is sensitive to the touch of a user input object (e.g., a finger or a stylus). The touch-sensitive component can serve to implement a virtual keyboard. Other example user input components include a computer mouse, a remote, a controller, a microphone, a traditional keyboard, or other means by which a user can provide user input. In some implementations, the one or more user input components 1622 can include one or more gesture processing engines to determine touch gestures, audio gestures, and/or body gestures. The one or more user interfaces 1624 can be configured to obtain and/or display data. The one or more user interfaces 1624 can be associated with an operating system, one or more applications, one or more web platforms, and/or one or more devices. The one or more sensors 1626 can include one or more image sensors, one or more infrared sensors, one or more light detection and ranging (lidar) sensors, one or more audio sensors, one or more touch sensors, one or more sonic navigation and ranging (sonar) sensor, and/or one or more heat sensors.

The user computing system(s) 104 can be communicatively connected with the data acquisition system(s) 102 via the network 1680, which can include the internet (e.g., ethernet and/or WiFi), Bluetooth, and/or direct wiring.

The data acquisition system 102 can include one or more computing devices. The computing devices can include a mobile computing device (e.g., a smartphone or tablet), a laptop computing device, a desktop computing device, a wearable computing device (e.g., a smart watch, a smart jacket, smart glasses, smart backpacks, etc.), a smart appliance (e.g., a smart thermostat, a smart refrigerator, a smart washing machine, a smart dryer, etc.), an embedded computing device, a surveillance computing device (e.g., a drone), or any other type of computing device.

The data acquisition system 102 can include one or more processors 1712 that can be utilized to perform one or more operations. The one or more processors 1712 can include any suitable processing device (e.g., a processor core, a microprocessor, an ASIC, a FPGA, a controller, a microcontroller, etc.) and can be one processor or a plurality of processors that are operatively connected. The one or more processors 1712 can perform operations in series and/or in parallel. The one or more processors 1712 may be dedicated to a particular computing device and/or may be utilized by a plurality of devices to perform processing tasks.

The data acquisition system 102 may include memory 1714 that can store data 1716 and/or instructions 1718. The memory 1714 can include one or more non-transitory computer-readable storage mediums, such as RAM, ROM, EEPROM, EPROM, flash memory devices, magnetic disks, etc., and combinations thereof. The data 1716 can include user data, application data, operating system data, etc. The data 1716 can include text data, image data, audio data, statistical data, latent encoding data, etc. The instructions 1718 can include instructions that when executed by the one or more processors 1712 cause the user computing device 104 to perform operations.

In some implementations, the data acquisition system 102 can store and utilize one or more machine-learned models 1720. The one or more machine-learned models 1720 can include a computer vision model, which can for example include an object detection model. The one or more machine-learned models 1720 can further include a detection model, a natural language processing model, a segmentation model, a classification model, an augmentation model, a generative model, a discriminative model, and/or one or more other model types. In some implementations, the one or more machine-learned models 1720 can include various machine-learned models such as neural networks (e.g., deep neural networks) or other types of machine-learned models, including non-linear models and/or linear models. Neural networks can include convolutional neural networks, feed-forward neural networks, recurrent neural networks (e.g., long short-term memory recurrent neural networks), or other forms of neural networks. The one or more machine-learned models 1620 may include one or more transformer models.

The data acquisition system 102 can include one or more user input components 1722, one or more user interfaces 1724, and/or one or more sensors 1726. The one or more user input components 1722 can be configured to receive user inputs and/or environmental inputs. For example, the one or more user input components 1722 can include a touch-sensitive component (e.g., a touch-sensitive display or a touch pad) that is sensitive to the touch of a user input object (e.g., a finger or a stylus). The touch-sensitive component can serve to implement a virtual keyboard. Other example user input components include a computer mouse, a remote, a controller, a microphone, a traditional keyboard, or other means by which a user can provide user input. In some implementations, the one or more user input components 1722 can include one or more gesture processing engines to determine touch gestures, audio gestures, and/or body gestures. The one or more user interfaces 1724 can be configured to obtain and/or display data. The one or more user interfaces 1724 can be associated with an operating system, one or more applications, one or more web platforms, and/or one or more devices. The one or more sensors 1726 can include one or more image sensors, one or more infrared sensors, one or more light detection and ranging (lidar) sensors, one or more audio sensors, one or more touch sensors, one or more sonic navigation and ranging (sonar) sensor, and/or one or more heat sensors.

The data acquisition system 102 can be communicatively connected with the user computing systems 104 via the network 1680, which can include the internet (e.g., ethernet and/or WiFi), Bluetooth, and/or direct wiring.

The user computing system 104 and/or the data acquisition system 104 can train the models 1620 and/or 1720 via interaction with the training computing system 150 that is communicatively coupled over the network 1680. The training computing system 150 can be separate from the data acquisition system 102 or can be a portion of the data acquisition system 102.

The training computing system 150 includes one or more processors 152 and a memory 154. The one or more processors 152 can be any suitable processing device (e.g., a processor core, graphics processing unit (GPU), tensor processing unit (TPU), a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 1620 and/or 1720 stored at the user computing system 104 and/or the data acquisition system 102 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 1620 and/or 1720 based on a set of training data (or training dataset) 162. The training data 162 can include training images (e.g., training image data) of a plurality of training components. For example, if the component is a gas turbine component (such as an airfoil), then the training components may also be gas turbine components (e.g., airfoils), and the machine-learned models 1620 and/or 1720 may be trained on the training images of the plurality of training components. The training images may include pre-operation images and post operation images of the training components. For example, the pre-operation images may be images of the training components before ever having undergone an operational cycle. Post-operation images may be images of the training components after having undergone one or more operational cycle.

In exemplary embodiments, the machine-learned models 1620, 1720 were trained on the training data 162 that includes training images of a plurality of training components, training stress maps of the plurality of training components, and multi-step predicted lifespan generated by the multi-step path 501 described above. For example, a training images and training stress maps (as well as training operational data) gathered or obtained from a plurality of training components (which may be the same type of component as the component 10). The training images, training stress maps, and/or training operational data may be run through the multi-step path 501 described above with reference to FIG. 2, in order to generate multi-step predicted lifespan of the training components. In this way, the machine-learned models 1620, 1720 (such as the machine-learned model 520 described above) may be provided with the same training input data that was provided to the multi-step path 501 and generate a predicted lifespan of the component, which may then be compared to the multi-step predicted lifespan to determine the accuracy of the machine-learned models 1620, 1720.

Stated otherwise, referring back to FIG. 2, during the training of the machine-learned model 520, training images, training stress maps, and/or training operational data may be provided to both the multi-step path 501 and the machine-learned model 520 via the end-to-end path. The multi-step path 501 may output the multi-step predicted lifespan, and the end-to-end path (e.g., via the machine-learned model 520) may output a predicted lifespan, which may be compared to the multi-step predicted lifespan of the multi-step path 501. This process may be repeated many times to train the machine-learned model 520 and/or to increase the accuracy of the machine-learned model 520.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 1680 can include any type of communications network (e.g., a local area network (e.g., intranet), wide area network (e.g., Internet), or some combination thereof) and can include any number of wired or wireless links. Communication over the network 1680 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The computing system 100 can be utilized to implement the systems and methods disclosed herein. Other computing systems including other system configurations may be utilized to implement the systems and methods disclosed herein.

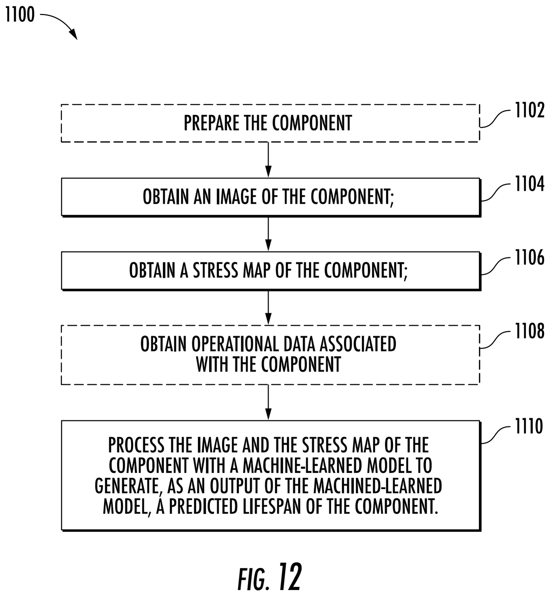

Referring now to FIG. 12, a flow diagram of a method 1100 for determining component 10 predicted lifespan is illustrated in accordance with embodiments of the present subject matter. One or more steps of such methods may be performed by, for example, a computing system 100 as discussed herein. In general, the method 1100 will be described herein with reference to the computing system 100, the component 10, and the process 500 described above with reference to FIGS. 1-10. However, it will be appreciated by those of ordinary skill in the art that the disclosed method 1100 may generally be utilized with any other suitable system configuration. In addition, although FIG. 12 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure. Dashed boxes indicate optional steps of the method 1100.

In some embodiments, the method may include utilizing the component in one or more operational cycles of a machine. For example, in exemplary implementations, the component may be a gas turbine component. The one or more operational cycles may include operating the gas turbine for a set period (e.g. between about 10,000 hours and about 35,000 hours of operation) with the gas turbine component installed. The method may include, after the operational cycle, removing the gas turbine component from the gas turbine.

For example, the method 1100 may include, at (1102), preparing the component, such as for imaging of the component. Such preparation may include, for example, surface preparation (e.g. acid etching, electrochemical treatment, or other chemical treatment, or mechanical polishing, etc.) of the component and/or other suitable processes which facilitate improved visibility of grain structures of the component surface.

In many implementations, the method 1100 may include, at (1104), obtaining, by a computing system comprising one or more computing devices, an image of the component. The image may be obtained by the data acquisition system 102 described above with reference to FIG. 1. The image may be at least one of a photograph, a video, a laser scan image, an x-ray scan image, a Laue orientation image, an electron channeling contrast image, or a three-dimensional scanned geometry.

In certain implementations, the method 1100 may include, at (1106), obtaining, by the computing system, a stress map of the component. The stress map may, for example, be generated via a finite element analysis ("FEA") of the component, which may for example be performed by the computing system or performed separately (such as via a separate computing system) and provided to the computing system. Examples of suitable FEA software for such analyses include, for example, ANSYS, Simulia, Nastran, etc. The stress map may indicate regions of high stress and low stress in the component, which may be at least partially based on operational data associated with the component (such as operation hours, average temperature the component is exposed to, or other operational data).

In various embodiments, the method 1100 may include, at (1108) obtaining operational data associated with the component. The operational data may be associated with the component and may include time data and temperature data. The time data may be indicative of an amount of time the component spent in operation. For example, in embodiments in which the component is a gas turbine component, the time data may be indicative of an amount of time the gas turbine component spent inside an operating gas turbine. The temperature data may be indicative of a plurality of temperatures (or average temperature) that the component was exposed to when in operation. For example, in embodiments in which the component is a gas turbine component, the temperature data may be the temperatures the gas turbine component was exposed to during operation, which may be a plurality of temperatures over a time period or an average temperature. Steps 1104, 1106, and 1108 may be performed parallelly (e.g., simultaneously) and/or in an alternate order than is illustrated.

In exemplary embodiments, the method 1100 may include, at (1110) processing, by the computing system, the image and the stress map of the component with a machine-learned model to generate, as an output of the machined-learned model, a predicted lifespan of the component. In some implementations, operational parameters, such as operational time data and temperature data, may also be utilized by the machine learned model to generate the predicted lifespan. In some implementations, the method may include processing, by the computing system, the image, the stress map, and the operational data with the machine-learned model to generate the predicted lifespan of the component. The predicted lifespan may be at least one of a binary output, an integer output, and/or a probability density function. The binary output may be a single output (e.g., yes or no) of whether the component can survive another operational cycle. The integer output may be a number of operational cycles the component can survive (e.g., one more cycle, two more cycles, three more cycles, etc.). The probability density function may indicate an amount of hours the component can survive in operation. The probability density function may describe the likelihood of component survival over a particular number of operation hours. More specifically, the probability density function may be descriptive of the likelihood of a continuous random variable taking on a particular value. Particularly, a cumulative distribution function (CDF) may be output as the predicted lifespan, which describes the probability that a random variable (X) will take a value less than or equal to a specific value (x). For example, a CDF as a predicted lifespan may indicate a probability (e.g., as a percent) to reach X hours.

In many embodiments, the machine-learned model (e.g., the machine-learned model 520) may be a first machine-learned model, and the system may further include a second machine-learned model. The second machine-learned model may be configured for modifying, enhancing, or transforming the image (e.g., prior to being used in the first machine-learned model for processing and generating the predicted lifespan). The computing system may process the image with the second machine-learned model to generate an enhanced image. In such implementations, the method may further include processing, by the computing system, the enhanced image and the stress map of the component with the first machine-learned model to generate, as the output of the first machined-learned model, the predicted lifespan of the component.

In many embodiments, the method may include training the machine-learned model, e.g., via a model trainer that can train the machine-learned model based on a set of training data (or training dataset). The training data can include training image of a plurality of training components. For example, if the component is a gas turbine component (such as an airfoil), then the training components may also be gas turbine components (e.g., airfoils), and the machine-learned model may be trained on the training images of the plurality of training components. The training images may include pre-operation images and post operation images of the training components. For example, the pre-operation images may be images of the training components before ever having undergone an operational cycle. Post-operation images may be images of the training components after having undergone one or more operational cycle.

In exemplary embodiments, the machine-learned model was trained on the training data that includes training images of a plurality of training components, training stress maps of the plurality of training components, and multi-step predicted lifespan. For example, training images and training stress maps (as well as training operational data) gathered or obtained from a plurality of training components (which may be the same type of component as the component 10). The training images, training stress maps, and/or training operational data may be run through the multi-step path 501 described above with reference to FIG. 2, in order to generate multi-step predicted lifespan of the training components. In this way, the machine-learned model may be provided with the same training input data that was provided to the multi-step path 501 and generate a predicted lifespan of the component, which may then be compared to the multi-step predicted lifespan to determine the accuracy of the machine-learned models.

In many implementations, training the machine learned model may further include adjusting or modifying weights or parameters of the machine-learned model based on the comparison between the predicted lifespan of the component and the multi-step predicted lifespan. This process may be repeated until the error (or difference) between the generated output from the machine learned model and multi-step output is minimized or entirely eliminated.

For example, to generate the multi-step predicted lifespan for each training component of the plurality of training components, the method may further include processing the training image of the training component to detect a grain structure on the training component; comparing the detected grain structure with the corresponding training stress map of the training component; and determining based on a localization of the detected grain structure and the training stress map the multi-step predicted lifespan of the training component. In such embodiments, processing the training image may include performing a pixel analysis of the training image by utilizing computer vision. Additionally, in such implementations, the comparing step may include overlaying the training stress map onto the processed training image to compare the localization of the detected grain structure with a stress direction of the training stress map. Further, in such implementations the determining step may include determining a creep probability based on the localization of the detected grain structure and a stress direction of the training stress map. Based on the creep probability, the method may include determining the multi-step predicted lifespan of the training component.

In exemplary embodiments, the determining step is further based on one of a material type of the component, a use time of the training component, and/or a use temperature of the training component, as discussed herein. The training component may be the same type of component as the component 10. For example, the training component and the component 10 may be a gas turbine component, such as a turbine component or a compressor component. The turbine components may be as a turbine airfoil, turbine shroud, turbine power nozzle, or other turbine component. The compressor components may be a compressor rotor blade, a compressor stator vane, or other compressor components.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:
A computer-implemented method for determining component predicted lifespan, the method comprising: obtaining, by a computing system comprising one or more computing devices, an image of the component; obtaining, by the computing system, a stress map of the component, the stress map indicating areas of high stress and low stress in the component; processing, by the computing system, the image and the stress map of the component with a machine-learned model to generate, as an output of the machined-learned model, a predicted lifespan of the component.

The method of any preceding clause, wherein the component has undergone at least one operational cycle.

The method of any preceding clause, wherein the component is a new component.

The method of any preceding clause, wherein the predicted lifespan is at least one of a binary output of whether the component can survive another operational cycle, an integer output of a number of operational cycles the component can survive, or a probability density function.

The method of any preceding clause, wherein the image is one of a photograph, a video frame, a laser scan image, an x-ray scan image, a Laue orientation image, an electron channeling contrast image, or a three-dimensional scanned geometry.

The method of any preceding clause, further comprising: obtaining, by the computing system, operational data associated with the component, the operation data including time data and temperature data; and processing, by the computing system, the image, the stress map, and the operational data with the machine-learned model to generate, as the output of the machined-learned model, the predicted lifespan of the component.

The method of any preceding clause, wherein the machine-learned model was trained on a training dataset comprising training images of a plurality of training components.

The method of any preceding clause, wherein the machine-learned model is a first machine-learned model, and wherein the method further comprises: processing the image with a second machine-learned model to generate an enhanced image; and processing, by the computing system, the enhanced image and the stress map of the component with the first machine-learned model to generate, as the output of the machined-learned model, the predicted lifespan of the component.

The method of any preceding clause, wherein the machine-learned model was trained on a training dataset comprising training images of a plurality of training components, training stress maps of the plurality of training components, and multi-step predicted lifespan of the plurality of training components.

The method of any preceding clause, wherein the multi-step predicted lifespan for each training component of the plurality of training components is generated by: processing the training image of the training component to detect a grain structure on the training component; comparing the detected grain structure with the corresponding training stress map of the training component; and determining based on a localization of the detected grain structure and the training stress map the multi-step predicted lifespan of the training component.

The method of any preceding clause, wherein processing the training image comprises performing a pixel analysis of the training image by utilizing computer vision.

The method of any preceding clause, wherein the comparing step comprises overlaying the training stress map onto the processed training image to compare the localization of the detected grain structure with a stress direction of the training stress map.

The method of any preceding clause, wherein the determining step comprises determining a creep probability based on the localization of the detected grain structure and a stress direction of the training stress map, and determining the multi-step predicted lifespan of the training component based on the creep probability.

The method of any preceding clause, wherein the machine-learned model was trained on a training dataset comprising training images of a plurality of training components, training stress maps of the plurality of training components, and multi-step predicted lifespan of the plurality of training components, wherein the multi-step predicted lifespan for each training component of the plurality of training components is generated by the following operations: processing the training image of the training component to detect a grain structure on the training component; comparing the detected grain structure with the corresponding training stress map of the training component; and determining based on a localization of the detected grain structure and the training stress map the multi-step predicted lifespan of the training component.

A computing system for determining component predicted lifespan, the system comprising: one or more processors; and one or more non-transitory computer-readable media that collectively store instructions that, when executed by the one or more processors, cause the computing system to perform operations, the operations comprising: obtaining an image of the component; obtaining a stress map of the component, the stress map indicating areas of high stress and low stress in the component; processing the image and the stress map of the component with a machine-learned model to generate, as an output of the machined-learned model, a predicted lifespan of the component.

The system of any preceding clause, wherein the predicted lifespan is at least one of a binary output of whether the component can survive another operational cycle, an integer output of a number of operational cycles the component can survive, or a probability density function.

The system of any preceding clause, wherein the image is one of a photograph, a video frame, a laser scan image, an x-ray scan image, a Laue orientation image, an electron channeling contrast image, or a three-dimensional scanned geometry.

The system of any preceding clause, wherein the operations further comprise: obtaining, by the computing system, operational data associated with the component, the operation data including time data and temperature data; and processing, by the computing system, the image, the stress map, and the operational data with the machine-learned model to generate, as the output of the machined-learned model, the predicted lifespan of the component.

The system of any preceding clause, wherein the machine-learned model was trained on a training dataset comprising training images of a plurality of training components.

The system of any preceding clause, wherein the machine-learned model is a first machine-learned model, and wherein the operations further comprise: processing the image with a second machine-learned model to generate an enhanced image; and processing, by the computing system, the enhanced image and the stress map of the component with the first machine-learned model to generate, as the output of the machined-learned model, the predicted lifespan of the component.

The system of any preceding clause, wherein the machine-learned model was trained on a training dataset comprising training images of a plurality of training components, training stress maps of the plurality of training components, and multi-step predicted lifespan of the plurality of training components, wherein the multi-step predicted lifespan for each training component of the plurality of training components is generated by the following operations: processing the training image of the training component to detect a grain structure on the training component; comparing the detected grain structure with the corresponding training stress map of the training component; and determining based on a localization of the detected grain structure and the training stress map the multi-step predicted lifespan of the training component.

## Claims

1. A computer-implemented method for determining component predicted lifespan, the method comprising:
obtaining, by a computing system (100) comprising one or more computing devices, an image (504) of the component (10);
obtaining, by the computing system (100), a stress map (506) of the component (10), the stress map (506) indicating areas of high stress and low stress in the component (10);
processing, by the computing system (100), the image (504) and the stress map (506) of the component (10) with a machine-learned model (520) to generate, as an output of the machined-learned model (520), a predicted lifespan (522) of the component (10).

2. The method of claim 1, wherein the component (10) has undergone at least one operational cycle.

3. The method of claim 1, wherein the component (10) is a new component.

4. The method of any preceding claim, wherein the predicted lifespan (522) is at least one of a binary output (540) of whether the component (10) can survive another operational cycle, an integer output (542) of a number of operational cycles the component (10) can survive, or a probability density function (544).

5. The method of any preceding claim, wherein the image (504) is one of a photograph (510A, 510B), a video frame, a laser scan image, an x-ray scan image, a Laue orientation image, an electron channeling contrast image, or a three-dimensional scanned geometry.

6. The method of any preceding claim, further comprising:
obtaining, by the computing system (100), operational data (508) associated with the component (10), the operation data (508) including time data and temperature data; and
processing, by the computing system (100), the image (504), the stress map (506), and the operational data (508) with the machine-learned model (520) to generate, as the output of the machined-learned model (520), the predicted lifespan (522) of the component (10).

7. The method of any preceding claim, wherein the machine-learned model (520) is a first machine-learned model (520), and wherein the method further comprises:
processing the image (504) with a second machine-learned model to generate an enhanced image (602); and
processing, by the computing system (100), the enhanced image (602) and the stress map (506) of the component (10) with the first machine-learned model (520) to generate, as the output of the machined-learned model (520), the predicted lifespan (522) of the component (10).

8. The method of any preceding claim, wherein the machine-learned model (520) was trained on a training dataset (162) comprising training images of a plurality of training components.

9. The method of claim 8, wherein the training dataset (162) further comprises training stress maps of the plurality of training components, and multi-step predicted lifespan of the plurality of training components.

10. The method of claim 9, wherein the multi-step predicted lifespan for each training component of the plurality of training components is generated by:
processing the training image of the training component to detect a grain structure on the training component;
comparing the detected grain structure with the corresponding training stress map of the training component; and
determining based on a localization of the detected grain structure and the training stress map the multi-step predicted lifespan of the training component.

11. The method of claim 10, wherein processing the training image comprises performing a pixel analysis of the training image by utilizing computer vision.

12. The method of claim 10 or 11, wherein the comparing step comprises overlaying the training stress map onto the processed training image to compare the localization of the detected grain structure with a stress direction of the training stress map.

13. The method of any of claims 10 to 12, wherein the determining step comprises determining a creep probability based on the localization of the detected grain structure and a stress direction of the training stress map, and determining the multi-step predicted lifespan of the training component based on the creep probability.

14. A computing system (100) for determining component predicted lifespan, the system (100) comprising:
one or more processors (1612); and
one or more non-transitory computer-readable media (1614) that collectively store instructions that, when executed by the one or more processors (1612), cause the computing system (100) to perform operations, the operations comprising:
obtaining an image (504) of the component (10);
obtaining a stress map (506) of the component (10), the stress map (506) indicating areas of high stress and low stress in the component (10);
processing the image (504) and the stress map (506) of the component (10) with a machine-learned model (520) to generate, as an output of the machined-learned model, a predicted lifespan (522) of the component (10).

15. The system of claim 14, wherein the predicted lifespan (522) is at least one of a binary output (540) of whether the component (10) can survive another operational cycle, an integer output (542) of a number of operational cycles the component (10) can survive, or a probability density function (544).
